# EUROPÄISCHE PATENTSCHRIFT

(11) **EP 1 420 938 B1**
(45) Veröffentlichungstag und Bekanntmachung des Hinweises auf die Patenterteilung: **09.11.2005**
(21) Anmeldenummer: 02760158.2
(22) Anmeldetag: 30.08.2002
(51) Int. Cl.: B29C 69/00, F02D 9/10

(54) **VERFAHREN ZUR HERSTELLUNG EINES DROSSELKLAPPENSTUTZENGEHÄUSES UND EINER DROSSELKLAPPE**
METHOD FOR THE PRODUCTION OF A THROTTLE VALVE CONNECTION PIECE HOUSING AND A THROTTLE VALVE
PROCEDE DE FABRICATION D'UN BOITIER TUBULAIRE DE CLAPET D'ETRANGLEMENT ET D'UN CLAPET D'ETRANGLEMENT

(30) Priorität: 31.08.2001 DE 10142452
(43) Veröffentlichungstag der Anmeldung: 26.05.2004
(73) Patentinhaber: SIEMENS AKTIENGESELLSCHAFT, 80333 München (DE)
(72) Erfinder: VON WERDER, Martin, 22949 Ammersbek (DE)
(86) Internationale Anmeldenummer: PCT/DE2002/003241
(87) Internationale Veröffentlichungsnummer: WO 2003/022554

(56) Entgegenhaltungen:
- DE-A- 3 937 281
- DE-C- 19 820 614
- US-A- 5 098 064
- US-A- 5 275 375
- US-A- 5 374 031
- US-A- 5 421 718
- US-A- 5 794 591

## Beschreibung

Die Erfindung bezieht sich auf ein Verfahren zur Herstellung eines Drosselklappenstutzengehäuses und einer Drosselklappe, insbesondere für ein Kraftfahrzeug, als Spritzgußteile, wobei das Drosselklappenstutzengehäuse eine Durchströmöffnung besitzt, die durch die Drosselklappe absperrbar ist, mit einer sich quer zur Längsachse zur Durchtrittsöffnung erstreckenden Schwenkachse, entlang der die Drosselklappe eine durchgehende Wellenbohrung besitzt, in die eine Drosselklappenwelle drehfest einsetzbar ist, die mit ihren beidseitig aus der Wellenbohrung herausragenden Enden in zur Wellenbohrung koaxiale Lagerbohrungen im Drosselklappenstutzengehäuse hineinragt, wobei die Drosselklappe in ihrer Schließstellung mit ihrem radial umlaufenden Rand an der Innenwand der Durchströmöffnung in Anlage ist, wobei das Drosselklappenstutzengehäuse zusammen mit der in Schließstellung befindlichen Drosselklappe als einteiliges Spritzgußteil in einer Spritzgußform hergestellt wird, wobei die Drosselklappe an ihrem radial umlaufenden Rand mit der Innenwand der Durchströmöffnung verbunden wird und wobei nach dem Erstarren des entformten Spritzgußteils die Drosselklappe entlang ihres radial umlaufenden Randes durch einen Schnitt von der Innenwand der Durchströmöffnung getrennt wird.

Bei Drosselklappenstutzen ist es von besonderer Wichtigkeit, daß in der Schließstellung der Drosselklappe eine möglichst vollkommene Absperrung der Durchströmöffnung erfolgt. Dies ist insbesondere erforderlich, wenn der Drosselklappenstutzen in der Luftzufuhrleitung zu einer Brennkraftmaschine angeordnet ist.

Aus der US-A-5,794,591 ist ein durch Spritzgießen hergestelltes Drosselklappengehäuse bekannt. Bei diesem Drosselklappengehäuse führen die dabei unvermeidlichen Herstellungstoleranzen dazu, daß es zu keiner weitgehend vollkommenen Absperrung der Durchflußöffnung kommen kann. Um diesen Nachteil zu beseitigen, ist es bekannt, in ein bereits fertig hergestelltes Drosselklappenstutzengehäuse separat eine Drosselklappe aus Kunststoff einzuspritzen, um so die Drosselklappe dem Drosselklappenstutzengehäuse anzupassen.

Dieses Verfahren ist insbesondere durch die zwei Spritzgießverfahren sehr aufwendig. ,

In der US-A-5,098,064 ist ein Drosselklappenstutzen offenbart, bei dem die Drosselklappe an ihrem Umfang einen Rand aus einem elastischen Material aufweisen kann. Damit ist die Drosselklappe mehrteilig aufgebaut. Die Bauteile des Drosselklappenstutzens und der Drosselklappe sind daher in unterschiedlichen Werkzeugformen aufwendig zu fertigen.

Es ist daher Aufgabe der Erfindung, ein Verfahren der eingangs genannten Art zu schaffen, durch das mit geringem Herstellungsaufwand ein Drosselklappenstutzen erzielt werden kann, der einfach montierbar ist und eine zumindest weitgehend vollkommene Absperrung der Durchflußöffnung gewährleistet.

Die Aufgabe wird erfindungsgemäß dadurch gelöst, daß die Drosselklappe eine durchgehende Wellenbohrung besitzt, in die eine Drosselklappenwelle drehfest einsetzbar ist, und dass das Drosselklappenstutzengehäuse und die Drosselklappe in einem einzigen Spritzgußvorgang hergestellt werden.

Da die Schnittlinie beim Trennen der Drosselklappe von der Innenwand der Durchströmöffnung an Drosselklappe und Durchströmöffnung identisch ist, wird ohne das Erfordernis einer weiteren Bearbeitung an Drosselklappe und Innenwand der Durchströmöffnung ein zumindest weitgehend vollkommenes Absperren der Durchflußöffnung bei in Schließstellung befindlicher Drosselklappe erreicht.

Der einzige erforderliche Spritzgießvorgang führt zu einer weiteren erheblichen Reduzierung des Herstellungsaufwandes.
Zur leichten Trennbarkeit der Drosselklappe von der Innenwand der Durchströmöffnung sowie zu einem Vermeiden eines Verziehens an den zu schneidenden Bereichen führt es, wenn die Drosselklappe entlang ihres mit der Innenwand der Durchströmöffnung verbundenen radial umlaufenden Randes mit geringer Dicke hergestellt wird. Dies erfordert auch nur relativ geringe Kräfte zum Trennen der Drosselklappe von der Innenwand der Durchströmöffnung.

Um nicht nur einen optimal schließenden Sitz der Drosselklappe in ihrer Schließstellung an der Innenwand der Durchströmöffnung sondern gleichzeitig zu dieser Position eine Ausrichtung der Wellenbohrung in der Drosselklappe zu den Lagerbohrungen im Drosselklappenstutzengehäuse zu erreichen, können zum Herstellen der Wellenbohrungen in der Drosselklappe und der Lagerbohrungen in dem Drosselklappenstutzengehäuse zwei Kernteile koaxial zueinander in eine Spritzgußform eingelegt werden, die zum Entformen axial voneinander wegbewegbar sind, während des Spritzvorgangs mit ihren einander zugewandten Stirnseiten aneinander liegen und im Bereich der Wellenbohrung einen der Wellenbohrung entsprechenden Querschnitt und in den Bereichen der Lagerbohrungen den Lagerbohrungen entsprechende Querschnitte aufweisen. Nachdem Heraustrennen der Drosselklappe bracht nur noch eine Drosselklappenwelle durch die Lagerbohrungen in die Wellenbohrung eingeführt zu werden. Sollen die Lagerbohrungen zur Aufnahme von Lagern für die Drosselklappenwelle dienen, so können die Lagerbohrungen zur Aufnahme von Lagern, insbesondere von Wälzlagern, für die schwenkbare Lagerung der Drosselklappenwelle einen größeren Querschnitt aufweisen, als der Querschnitt der Wellenbohrung.

Um die Drosselklappe mit möglichst geringer Dicke herstellen zu können, kann die Drosselklappe mit einer nabenartigen Verdickung hergestellt werden, durch die sich etwa koaxial hindurch erstreckend die Wellenbohrung ausgebildet wird.

Dabei wird vorzugsweise der Querschnitt der Verdickung der Drosselklappe etwa dem Querschnitt der Lagerbohrungen im Drosselklappenstutzengehäuse entsprechend hergestellt.

Werden die Kernteile mit ihren dem Querschnitt der Lagerbohrungen entsprechenden Bereichen um ein geringes Maß in den Bereich der Durchströmöffnung ragend in die Spritzgußform eingelegt, so wird damit bereits eine Trennung der Drosselklappe vom Drosselklappenstutzengehäuse im Bereich der nabenartigen Verdickung der Drosselklappe erzeugt, wodurch in diesem dickwandigen Bereich kein Trennungsschnitt mehr erforderlich ist.
Eine einfache Möglichkeit den Trennungsschnitt durchzuführen besteht darin, daß der Schnitt mittels eines Laserstrahls erfolgt.

Nach einer anderen ebenfalls einfachen Möglichkeit erfolgt der Trennungsschnitt mittels eines Schneidwerkzeugs.

Dazu kann das Schneidwerkzeug zum Schneidvorgang axial in die Durchströmöffnung eingeführt werden und eine umlaufende Schneide besitzen, deren Umlaufkontur der Innenkontur der Durchströmöffnung im Anlagebereich der Drosselklappe in deren Schließstellung an der Innenwand der Durchströmöffnung entspricht.

Ist bereits durch die Kerne eine Trennung im Bereich der nabenartigen Verdickung erfolgt, kann die Umlaufkontur der Schneide etwa dem Querschnitt der nabenartigen Verdickung der Drosselklappe entsprechende Ausnehmungen aufweisen.

Um ein weitgehend gleichzeitiges Ausstanzen der Drosselklappe zu erzielen, kann bei in Schließstellung üblicher Weise geneigter Drosselklappe die Drosselklappe in ihrer Schließstellung unter einem vom rechten Winkel um einige Winkelgrade abweichenden Winkel zur Längsachse der Durchtrittsöffnung geneigt hergestellt werden und die durch die Umlaufkontur der Schneide bestimmte Schneidebene des Schneidwerkzeugs unter etwa dem selben Winkel gegenüber der Längsachse der Durchtrittsöffnung geneigt in die Durchtrittsöffnung zum Schneidvorgang eingeführt werden.

Das Drosselklappenstutzengehäuse und die Drosselklappe können als Kunststoffspitzgußteil hergestellt werden.

Insbesondere bei dünnem radial umlaufendem Rand der Drosselklappe können das Drosselklappenstutzengehäuse und die Drosselklappe als Leichtmetall-, insbesondere als Aluminiumspritzgußteil hergestellt werden.

Ein Ausführungsbeispiel der Erfindung ist in der Zeichnung dargestellt und wird im folgenden näher beschrieben. Es zeigen
- Figur 1: einen bis auf die Kerne für Wellenbohrung und Lagerbohrungen entformtes Drosselklappenstutzengehäuse mit Drosselklappe und arbeitsbereitem Schneidwerkzeug im Schnitt längs der Wellenbohrung
- Figur 2: das Drosselklappenstutzengehäuse mit Drosselklappe nach Figur 1 mit dem Schneidwerkzeug in der Schneidposition im Schnitt längs der Wellenbohrung
- Figur 3: eine Schnittansicht des Drosselklappenstutzengehäuses mit Drosselklappe und Schneidwerkzeug entlang der Linie A - A in Figur 1
- Figur 4: eine Schnittansicht des Drosselklappenstutzengehäuses mit Drosselklappe und Schneidwerkzeug entlang der Linie B - B in Figur 2
- Figur 5: eine perspektivische Ansicht von Drosselklappenstutzengehäuse, Drosselklappe und Schneidwerkzeug nach Figur 1
- Figur 6: eine Schnittansicht längs der Wellenbohrung eines Drosselklappenstutzens aus Drosselklappenstutzengehäuse mit auf Lagern montierter Drosselklappenwelle und Drosselklappe.

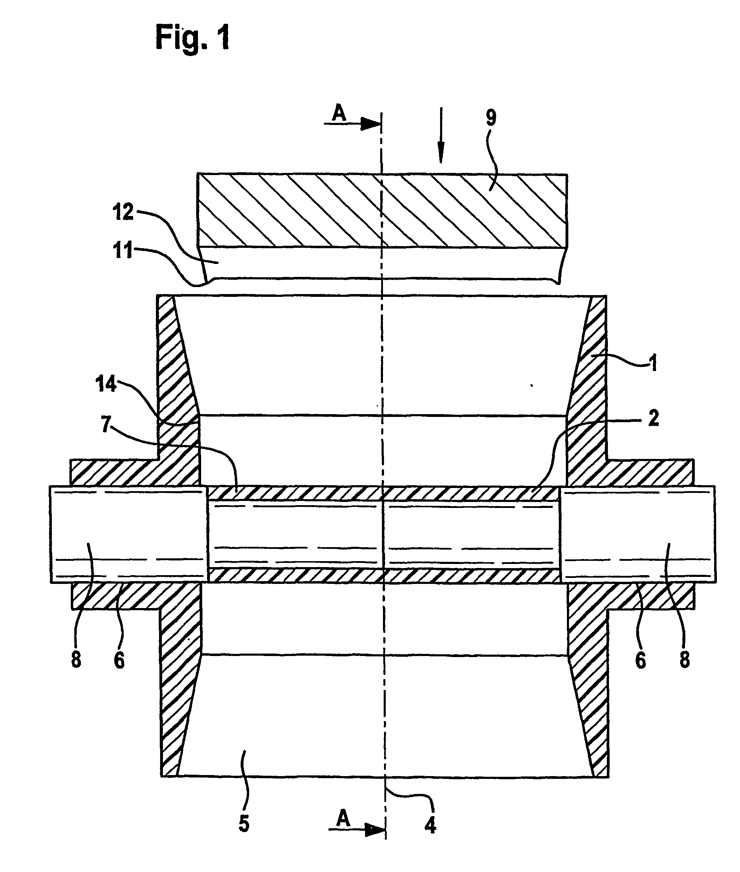

In Figur 1 ist ein einteiliges Spritzgußteil aus Kunststoff dargestellt, das aus einem Drosselklappenstutzengehäuse 1 und einer Drosselklappe 2 besteht. Das Spritzgußteil ist bereits aus seiner äußeren Spritzgußform entnommen.

Figur 1 ist ein Schnitt längs durch Drosselklappenstutzengehäuse 1 und Drosselklappe 2, der mittig eine Wellenbohrung 3 der Drosselklappe 2 schneidet, die sich quer zur Längsachse 4 einer durchgehenden Durchtrittsöffnung 5 des Drosselklappenstutzengehäuses 1 erstreckt.

Im Bereich der Drosselklappe 2 ist die Durchtrittsöffnung 5 mit zylindrischem Querschnitt ausgebildet, während die sich auf jeder Seite daran anschließenden Bereiche der Durchtrittsöffnung 5 zu ihren Mündungen nach außen hin sich konisch erweitern.

Koaxial zur Wellenbohrung 3 sind beidseitig in der Wand des Drosselklappenstutzengehäuses 1 Lagerbohrungen 6 ausgebildet, die einen größeren Durchmesser aufweisen, als die Wellenbohrung 4. Dieser größere Durchmesser der Lagerbohrungen 6 entspricht dem Durchmesser einer nabenartigen Verdickung 7 der Drosselklappe 2, durch die sich koaxial die Wellenbohrung 3 erstreckt und in der diese ausgebildet ist.

In der Wellenbohrung 3 und den Lagerbohrungen 6 sind noch vom Gießvorgang her zwei Kernteile 8 angeordnet, die entsprechend der danach geformten Wellenbohrung 3 und Lagerbohrungen 6 stufenartig ausgebildet sind und mit den Stirnseiten der freien Enden ihrer kleinen Stufen aneinander liegen. Die großen Stufen der Kernteile 8 ragen an ihrem Übergang zu den kleinen Stufen um ein geringes Maß in die Durchtrittsöffnung 5 hinein, so daß nach dem Entfernen der Kernteile 8 die Drosselklappe 2 im Bereich der nabenartigen Verdickung 7 keine Verbindung zum Drosselklappenstutzengehäuse 1 hat.

Oberhalb des Drosselklappenstutzengehäuses 1 ist arbeitsbereit bereits ein Schneidwerkzeug 9 vorhanden.

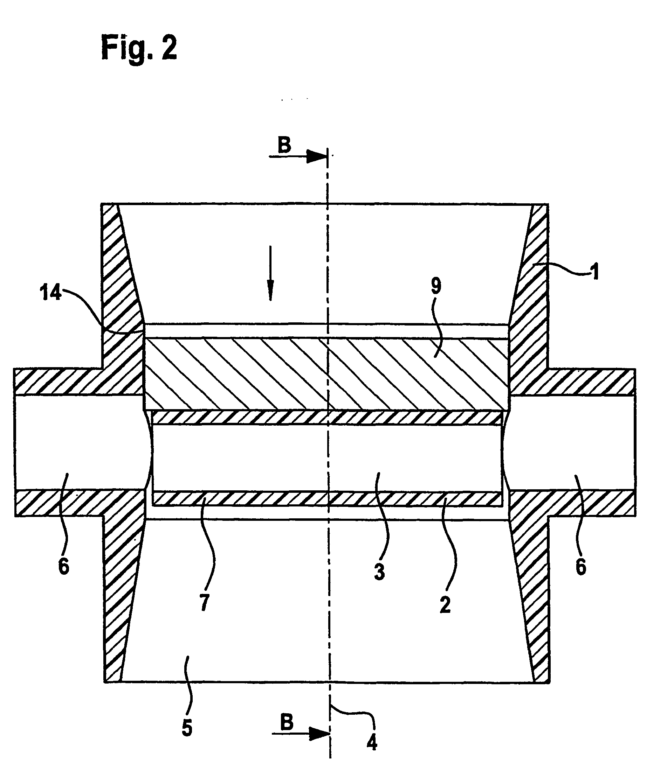

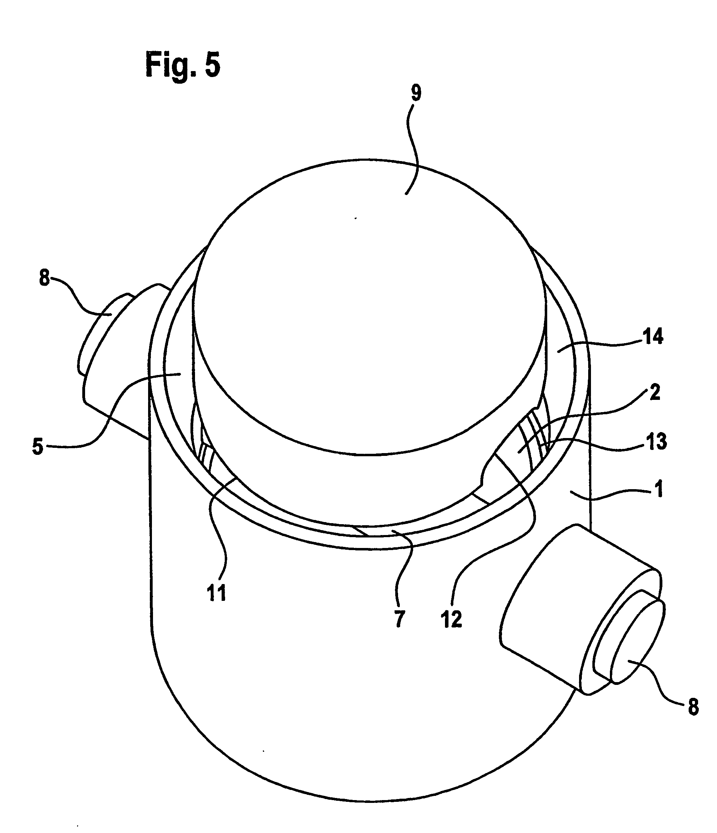

Die Darstellung in Figur 5 ist eine den Figuren 1 und 2 entsprechende perspektivische Darstellung.

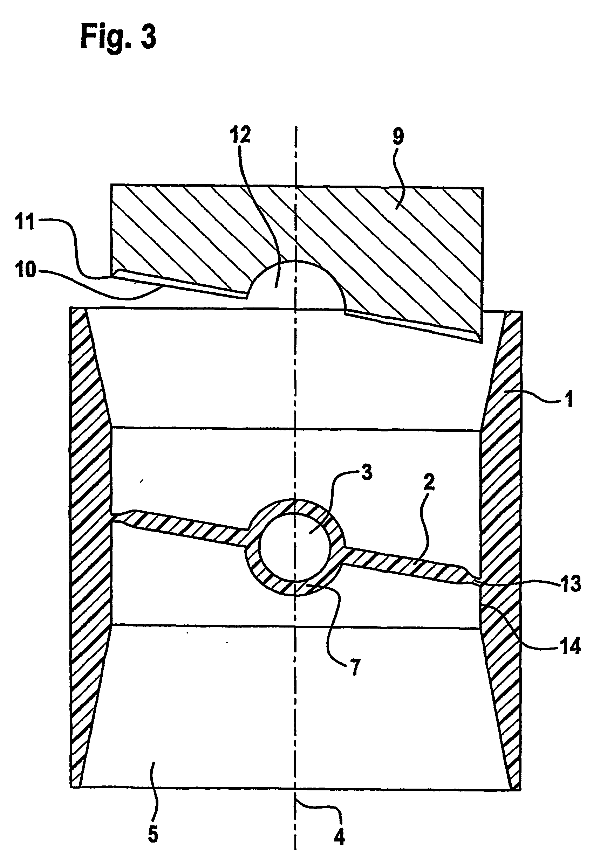

In der in Figur 3 dargestellten Schnittansicht entlang der Linie A - A in Figur 1 ist zu erkennen, daß die Drosselklappe 2 sich in ihrer Schließposition befindet, in der sie um einige Winkelgrade vom rechten Winkel zur Längsachse 4 der Durchtrittsöffnung 5 geneigt ist. Unter dem gleichen Winkel zur Längsachse 4 geneigt ist die Schneidebene 10 der Umlaufkontur der Schneide 11 des Schneidwerkzeugs 9 geneigt. Diese Umlaufkontur entspricht der Umlaufkontur der Durchtrittsöffnung 5 in derem zylindrischen Teil.

Entsprechend dem Querschnitt der nabenartigen Verdikkung 7 der Drosselklappe 2 weist die Schneide 11 sich diametral gegenüberliegend zwei Ausnehmungen 12 auf. Wie in Figur 3 deutlich zu erkennen ist, ist die Drosselklappe 2 entlang ihres radial umlaufenden Randes 13 einteilig mit dem Drosselklappenstutzengehäuse 1 verbunden, wobei die Dicke der Drosselklappe 2 im Bereich ihres umlaufenden Randes 13 deutlich geringer ist, als im übrigen Bereich der Drosselklappe 2.

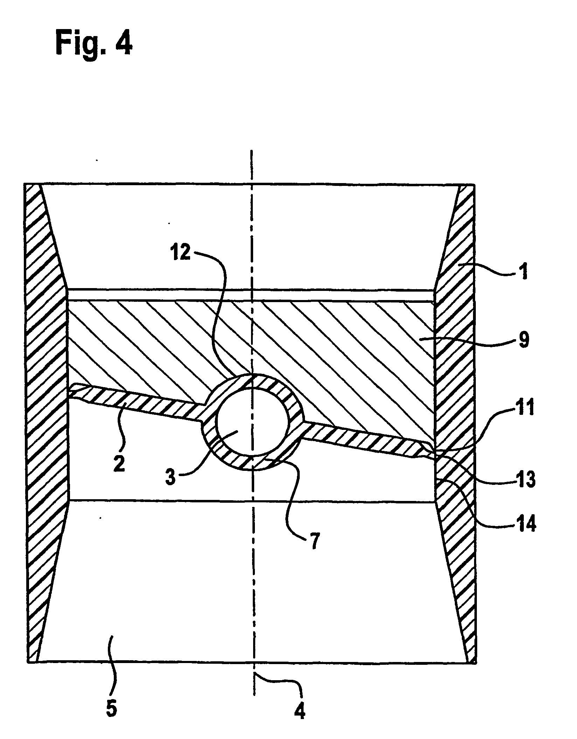

In den Figuren 2 und 4 sind die Kernteile 8 bereits entfernt und das Schneidwerkzeug 9 ist so weit koaxial in die Durchtrittsöffnung 5 hineinbewegt worden, daß durch seine Schneide 11 die Verbindung der Drosselklappe 2 entlang ihres umlaufenden, mit der Innenwand 14 des Drosselklappenstutzengehäuses 1 durchtrennt wurde. Dieser Trennungsschnitt ist eine axiale Fortsetzung der Innenwand 14 der Durchtrittsöffnung 5.

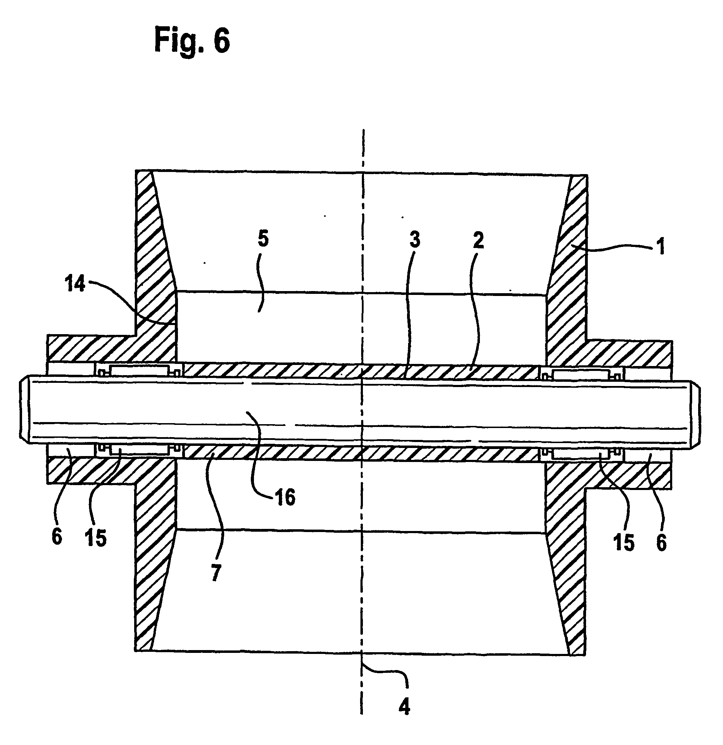

In Figur 6 ist das Schneidwerkzeug 9 bereits entfernt, Wälzlager 15 in die Lagerbohrungen 6 des Drosselklappenstutzengehäuses 1 eingesetzt und eine Drosselklappenwelle 16 durch die Wälzlager 15 in die Wellenbohrung 3 der Drosselklappe 2 so eingeführt, daß die Drosselklappe 2 drehfest mit der Drosselklappenwelle 16 verbunden ist.

Durch die Herstellung von Drosselklappe 2, Wellenbohrung 3 und Lagerbohrungen 6 an einem Bauteil, das nur durch den Trennungsschnitt des Schneidwerkzeugs 9 in zwei Teile aufgeteilt wurde, ist die Zuordnung der Bauteile des zusammengebauten Drosselklappenstutzens so, daß die Drosselklappe 2 in ihrer Schließstellung mit ihrem umlaufenden Rand 13 genau passend an der Schnittstelle der Innenwand 14 der Durchtrittsöffnung 5 in Anlage ist und diese völlig absperrt.

## Patentansprüche

1. Verfahren zur Herstellung eines Drosselklappenstutzengehäuses (1) und einer Drosselklappe (2), insbesondere für ein Kraftfahrzeug, als Spritzgußteile, wobei das Drosselklappenstutzengehäuse (1) eine Durchströmöffnung besitzt, die durch die Drosselklappe (2) absperrbar ist, mit einer sich quer zur Längsachse der Durchströmöffnung (5) erstreckenden Schwenkachse, entlang der die Drosselklappe (2) eine Wellenbohrung (3) besitzt, in die eine Drosselklappenwelle (16) einsetzbar ist, die mit ihren beidseitig aus der Wellenbohrung (3) herausragenden Enden in zur Wellenbohrung (3) koaxiale Lagerbohrungen (6) im Drosselklappenstutzengehäuse (1) hineinragt, wobei die Drosselklappe (2) in ihrer Schließstellung mit ihrem radial umlaufenden Rand an der Innenwand der Durchströmöffung (5) in Anlage ist, wobei das Drosselklappenstutzengehäuse (1) zusammen mit der in Schließstellung befindlichen Drosselklappe (2) als einteiliges Spritzgußteil in einer Spritzgußform hergestellt wird, wobei die Drosselklappe (2) an ihrem radial umlaufenden Rand (13) mit der Innenwand (14) der Durchströmöffnung (5) verbunden wird und wobei nach dem Erstarren des entformten Spritzgußteils die Drosselklappe (2) entlang ihres radial umlaufenden Randes (13) durch einen Schnitt von der Innenwand (14) der Durchströmöffnung (5) getrennt wird, **dadurch gekennzeichnet, daß** die Drosselklappe (2) eine durchgehende Wellenbohrung (3) besitzt, in die eine Drosselklappenwelle (16) drehfest einsetzbar ist und daß das Drosselklappensutztengehäuse (1) und die Drosselklappe (2) in einem einzigen Spritzgußvorgang hergestellt werden.

2. Verfahren nach Anspruch 1, **dadurch gekennzeichnet, daß** die Drosselklappe (2) entlang ihres mit der Innenwand (14) der Durchströmöffnung (5) verbundenen radial umlaufenden Randes (13) mit geringer Dicke hergestellt wird.

3. Verfahren nach einem der vorhergehenden Ansprüche, **dadurch gekennzeichnet, daß** zum Herstellen der Wellenbohrung (3) in der Drosselklappe (2) und der Lagerbohrungen (6) in dem Drosselklappenstutzengehäuse (1) zwei Kernteile (8) koaxial zueinander in eine Spritzgußform eingelegt werden, die zum Entformen axial voneinander weg bewegbar sind, während des Spritzvorgangs mit ihren einander zugewandten Stirnseiten aneinander liegen und im Bereich der Wellenbohrung (3) einen der Wellenbohrung (3) entsprechenden Querschnitt und in den Bereichen der Lagerbohrungen (6) den Lagerbohrungen (6) entsprechende Querschnitte aufweisen.

4. Verfahren nach Anspruch 3, **dadurch gekennzeichnet, daß** die Lagerbohrungen (6) zur Aufnahme von Lagern, insbesondere von Wälzlagern (15), für die schwenkbare Lagerung der Drosselklappenwelle (16) einen größeren Querschnitt aufweisen als der Querschnitt der Wellenbohrung (3).

5. Verfahren nach einem der vorhergehenden Ansprüche, **dadurch gekennzeichnet , daß** die Drosselklappe (2) mit einer nabenartige Verdickung (7) hergestellt wird, durch die sich etwa koaxial hindurch erstreckend die Wellenbohrung (3) ausgebildet wird.

6. Verfahren nach den Ansprüchen 4 und 5, **dadurch gekennzeichnet , daß** der Querschnitt der Verdickung (7) der Drosselklappe (2) etwa dem Querschnitt der Lagerbohrungen (6) im Drosselklappehstutzengehäuse (1) entsprechend hergestellt wird.

7. Verfahren nach Anspruch 3, **dadurch gekennzeichnet, daß** die Kernteile (8) mit ihren dem Querschnitt der Lagerbohrungen (6) entsprechenden Bereichen um ein geringes Maß in den Bereich der Durchströmöffnung (5) ragend in die Spritzgußform eingelegt werden.

8. Verfahren nach einem der vorhergehenden Ansprüche, **dadurch gekennzeichnet , daß** der Schnitt mittels eines Laserstrahls erfolgt.

9. Verfahren nach einem der Ansprüche 1 bis 7, **dadurch gekennzeichnet , daß** der Schnitt mittels eines Schneidwerkzeugs (9) erfolgt.

10. Verfahren nach Anspruch 9 und einem der vorhergehenden Ansprüche, **dadurch gekennzeichnet , daß** das Schneidwerkzeug (9) zum Schneidvorgang axial in die Durchströmöffnung (5) eingeführt wird und eine umlaufende Schneide (11) besitzt, deren Umlaufkontur der Innenkontur der Durchströmöffnung (5) im Anlagebereich der Drosselklappe (2) in deren Schließstellung an der Innenwand (14) der Durchströmöffnung (5) entspricht.

11. Verfahren nach Anspruch 7 und einem der vorhergehenden Ansprüche, **dadurch gekennzeichnet, daß** die Umlaufkontur der Schneide (11) etwa dem Querschnitt der nabenartigen Verdickung (7) der Drosselklappe (2) entsprechende Ausnehmungen (12) aufweist.

12. Verfahren nach einem der vorhergehenden Ansprüche, **dadurch gekennzeichnet, daß** die Drosselklappe (2) in ihrer Schließstellung unter einem vom rechten Winkel um einige Winkelgrade abweichenden Winkel zur Längsachse (4) der Durchtrittsöffnung (5) geneigt hergestellt wird und die durch die Umlaufkontur der Schneide (11) bestimmte Schneidebene (10) des Schneidwerkzeugs (9) unter etwa demselben Winkel gegenüber der Längsachse (4) der Durchtrittsöffnung (5) geneigt in die Durchtrittsöffnung (5) zum Schneidvorgang eingeführt wird.

13. Verfahren nach einem der vorhergehenden Ansprüche, **dadurch gekennzeichnet, daß** Drosselklappenstutzengehäuse (1) und Drosselkappe (2) als Kunststoffspritzgußteil hergestellt werden.

14. Verfahren nach einem der Ansprüche 1 bis 12, **dadurch gekennzeichnet, daß** Drosselklappenstutzengehäuse und Drosselklappe als Leichtmetall-, insbesondere als Aluminiumspritzgußteil hergestellt werden.

## Claims

1. Process for producing a throttle-valve housing (1) and a throttle valve (2), in particular for a motor vehicle, as injection mouldings, in which the throttle-valve housing (1) has a through-flow orifice which can be blocked off by the throttle valve (2), having a pivot axis, which extends transversely with respect to the longitudinal axis of the passage orifice (5) and along which the throttle valve (2) has a continuous shaft bore (3), into which a throttle-valve shaft (16) can be inserted, the ends of which throttle-valve shaft, projecting out of the shaft bore (3) on both sides, projecting into bearing bores (6) in the throttle-valve housing (1), which are coaxial with respect to the shaft bore (3), the throttle valve (2), in its closed position, bearing against the inner wall of the through-flow orifice (5) by means of its radially encircling edge, in which process the throttle-valve housing (1) together with the throttle valve (2) in its closed position is produced as a single-piece injection moulding in an injection mould and, the throttle valve (2) being connected, at its radially encircling edge (13), to the inner wall (14) of the through-flow orifice (5), and the throttle valve (2) being separated from the inner wall (14) of the through-flow orifice (5) along its radially encircling edge (13) by a cut after the demoulded injection moulding has solidified **characterized in that** the throttle valve (2) has a continuous shaft bore (3) into which a throttle-valve shaft (16) can be inserted in a rotationally fixed manner and **in that** the throttle valve housing (1) and the throttle valve (2) are produced in a single injection moulding process.

2. Process according to Claim 1, **characterized in that** the throttle valve (2) is produced with a small thickness along its radially encircling edge (13) which is connected to the inner wall (14) of the through-flow orifice (5).

3. Process according to one of the preceding claims, **characterized in that**, to produce the shaft bore (3) in the throttle valve (2) and the bearing bores (6) in the throttle-valve housing (1), two core parts (8) are inserted coaxially with respect to one another into an injection mould, which core parts can be moved away from one another in the axial direction for demoulding purposes, bear against one another by means of their mutually facing end sides during the injection operation and in the region of the shaft bore (3) have a cross section which corresponds to the shaft bore (3) and in the regions of the bearing bores (6) have cross sections which correspond to the bearing bores (6).

4. Process according to Claim 3, **characterized in that** the bearing bores (6), in order to accommodate bearings, in particular rolling-contact bearings (15), for the pivotable mounting of the throttle-valve shaft (16) have a larger cross section than the cross section of the shaft bore (3).

5. Process according to one of the preceding claims, **characterized in that** the throttle valve (2) is produced with a hub-like thickened portion (7), which the shaft bore (3) is designed to extend through approximately coaxially.

6. Process according to Claims 4 and 5, **characterized in that** the cross section of the thickened portion (7) of the throttle valve (2) is produced to approximately correspond to the cross section of the bearing bores (6) in the throttle-valve housing (1).

7. Process according to Claim 3, **characterized in that** the regions of the core parts (8) which correspond to the cross section of the bearing bores (6) are inserted into the injection mould in such a manner to project slightly into the region of the through-flow orifice (5).

8. Process according to one of the preceding claims, **characterized in that** the cut is made by means of a laser beam.

9. Process according to one of Claims 1 to 7, **characterized in that** the cut is made by means of a cutting tool (9).

10. Process according to Claim 9 and one of the preceding claims, **characterized in that** the cutting tool (9) for carrying out the cutting operation is introduced axially into the through-flow orifice (5) and has an encircling cutting edge (11), the peripheral contour of which corresponds to the inner contour of the through-flow orifice (5) in the region in which the throttle valve (2), in its closed position, bears against the inner wall (14) of the through-flow orifice (5).

11. Process according to Claim 7 and one of the preceding claims, **characterized in that** the peripheral contour of the cutting edge (11) has recesses (12) which approximately correspond to the cross section of the hub-like thickened portion (7) of the throttle valve (2).

12. Process according to one of the preceding claims, **characterized in that** the throttle valve (2), in its closed position, is produced so as to be inclined with respect to the longitudinal axis (4) of the passage orifice (5) at an angle which differs from a right angle by a few degrees, and the cutting plane (10) of the cutting tool (9), which is defined by the peripheral contour of the cutting edge (11), is introduced into the passage orifice (5) for the purpose of the cutting operation in a position in which it is inclined at approximately the same angle with respect to the longitudinal axis (4) of the passage orifice (5).

13. Process according to one of the preceding claims, **characterized in that** the throttle-valve housing (1) and throttle valve (2) are produced as a plastic injection moulding.

14. Process according to one of Claims 1 to 12, **characterized in that** the throttle-valve housing and throttle valve are produced as a light-metal injection moulding, in particular as an aluminum injection moulding.

## Revendications

1. Méthode de fabrication d'un boîtier (1) de tubulure à papillon de régulation des gaz et d'un papillon (2) de régulation des gaz, notamment pour un véhicule automobile, en tant que pièces moulées par injection, le boîtier (1) de tubulure à papillon de régulation des gaz ayant une buse traversée par les gaz pouvant être obturée par le papillon (2) de régulation des gaz et comportant un axe de pivotement, placé perpendiculairement à l'axe longitudinal de la buse (5) traversée par les gaz et le long duquel le papillon (2) de régulation des gaz a, pour un arbre, un alésage (3) dans lequel on peut insérer, de telle sorte qu'il y soit bloqué en rotation, un arbre (16) de papillon de régulation des gaz, dont les deux extrémités dépassant de l'alésage (3) font saillie dans des alésages (6) de paliers, ménagés dans le boîtier (1) de tubulure à papillon de régulation des gaz et qui sont coaxiaux avec l'alésage (3) prévu pour l'arbre, où la bordure radialement périphérique du papillon (2) de régulation des gaz est appliquée, dans sa position fermée, contre la paroi intérieure de la buse (5) traversée par les gaz, où le boîtier (1) de tubulure à papillon de régulation des gaz est fabriqué, en commun avec le papillon (2) de régulation des gaz se trouvant dans sa position fermée, sous la forme d'une seule pièce moulée par injection dans un moule à injection, la bordure (13) radialement périphérique du papillon (2) de régulation des gaz étant liée à la paroi intérieure (14) de la buse (5) traversée par les gaz et où, après la solidification de la pièce moulée par injection sortie du moule, le papillon (2) de régulation des gaz est séparé de la paroi intérieure (14) de la buse traversée par les gaz par une coupe le long de sa bordure (13) radialement périphérique **caractéri** **sée par le fait** que le papillon (2) de régulation des gaz a un alésage traversant (3) pour son arbre, dans lequel on peut insérer, de telle façon qu'il y soit bloqué en rotation, un arbre (16) de papillon de régulation des gaz et que le boîtier (1) de tubulure à papillon de régulation des gaz et le papillon (2) de régulation des gaz sont fabriqués en une seule opération de moulage à injection.

2. Méthode selon la revendication 1 **caractérisée par le fait que** le papillon (2) de régulation des gaz est fabriqué avec une épaisseur réduite le long de sa bordure (13) radialement périphérique liée à la paroi intérieure (14) de la buse (5) traversée par les gaz.

3. Méthode selon l'une des revendications précédentes **caractérisée par le fait que**, pour fabriquer l'alésage (3) de l'arbre dans le papillon (2) de régulation des gaz et les alésages (6) de paliers dans le boîtier (1) de tubulure à papillon de régulation des gaz, on insère dans le moule à injection deux pièces centrales (8) coaxiales l'une par rapport à l'autre, qui peuvent être écartées l'une de l'autre dans le sens axial pour le démoulage, dont les faces de tranche réciproques sont appliquées l'une contre l'autre pendant l'opération d'injection et qui ont, dans la zone de l'alésage (3) de l'arbre, une section correspondant à l'alésage (3) de l'arbre et, dans les zones des alésages (6) de paliers, des sections correspondant aux alésages (6) de paliers.

4. Méthode selon la revendication 3 **caractérisée par le fait que** les alésages (6) de paliers ont, pour la mise en place de paliers, notamment de paliers à roulement (15), destinés à la suspension pivotante de l'arbre (16) du papillon de régulation des gaz, une section supérieure à la section de l'alésage (3) de l'arbre.

5. Méthode selon l'une des revendications précédentes **caractérisée par le fait que** le papillon (2) de régulation des gaz est fabriqué avec un renflement (7) ressemblant à un moyeu à travers lequel est ménagé, d'une façon approximativement coaxiale, l'alésage (3) de l'arbre.

6. Méthode selon les revendications 4 et 5 **caractérisée par le fait que** la section du renflement (7) du papillon (2) de régulation des gaz est fabriquée approximativement en fonction de la section des alésages (6) de paliers dans le boîtier (1) de tubulure à papillon de régulation des gaz.

7. Méthode selon la revendication 3 **caractérisée par le** fai t que les pièces centrales (8) sont placées dans le moule à injection de telle sorte que leurs zones correspondant à la section des alésages (6) de paliers dépassent faiblement dans la buse (5) traversée par les gaz.

8. Méthode selon l'une des revendications précédentes **caractérisée par le fait que** la découpe est faite au moyen d'un rayon laser.

9. Méthode selon l'une des revendications 1 à 7 **caractérisée par le fait que** la découpe est faite au moyen d'un outil à découpe (9).

10. Méthode selon la revendication 9 et l'une des revendications précédentes **caractérisée par le fait que** l'outil à découpe (9) est introduit, pour l'opération de découpe, dans le sens axial dans la buse (5) traversée par les gaz et a un tranchant rotatif (11), dont le contour périphérique correspond au contour intérieur de la buse (5) traversée par les gaz dans la zone où le papillon (2) de régulation des gaz s'applique, dans sa position fermée, sur la paroi intérieure (14) de la buse (5) traversée par les gaz.

11. Méthode selon la revendication 7 et l'une des revendications précédentes **caractérisée par le fait que** le contour périphérique du tranchant (11) a des évidements (12) correspondant approximativement à la section du renflement (7) ressemblant à un moyeu du papillon (2) de régulation des gaz.

12. Méthode selon l'une des revendications précédentes **caractérisée par le fait que** le papillon (2) de régulation des gaz est fabriqué, dans sa position fermée, incliné, par rapport à l'axe longitudinal (4) de la buse (5) traversée par les gaz, d'un angle différant de quelques degrés de la perpendiculaire et que, pour l'opération de découpage, le plan (10) de découpage de l'outil de coupe (9) déterminé par le contour périphérique du tranchant (11) est introduit dans la buse (5) traversée par les gaz dans une position inclinée approximativement sous le même angle par rapport à l'axe longitudinal (4) de la buse (5) traversée par les gaz.

13. Méthode selon l'une des revendications précédentes **caractérisée par le fait que** le boîtier (1) de tubulure à papillon de régulation des gaz et le papillon (2) de régulation des gaz sont fabriqués comme pièce moulée par injection en matière plastique.

14. Méthode selon l'une des revendications 1 à 12 **caractérisée par le fait que** le boîtier de tubulure à papillon de régulation des gaz et le papillon de régulation des gaz sont fabriqués comme pièce moulée par injection en métal léger, notamment en aluminium.
